# EUROPEAN PATENT APPLICATION

(11) **EP 3 235 989 A1**
(43) Date of publication of application: **25.10.2017**
(21) Application number: 17000691.0
(22) Date of filing: 21.04.2017
(51) Int. Cl.: E05F 11/38

(54) **HOLDER FOR A VEHICLE WINDOW PLATE**

(30) Priority: 21.04.2016 JP 2016085164
(71) Applicant: ASAHI GLASS COMPANY, LIMITED, Tokyo 100-8405 (JP)
(72) Inventor: Kosaka, Yoshio, Tokyo 100-8405 (JP); Kano, Toshiyuki, Tokyo 100-8405 (JP)
(74) Representative: Müller-Boré & Partner Patentanwälte PartG mbB

(57) **Abstract**

A holder capable of dealing with window plates having different curvatures is provided. A holder 1 is to be attached to a vehicle window plate. The holder includes a bottom portion 2, a first side portion 3 provided to extend in a first direction perpendicular to the bottom portion 2, and a second side portion 4 opposite to the first side portion. A first end portion 21 and a second end portion 22 are provided to extend continuously to opposite sides of first side portion 3. The first end portion 21 and the second end portion 22 are inclined at a first angle with respect to the central portion 10 of the first side portion 3, and tip ends thereof inclined to approach the second side portion 4. A value t/w is 1.5 or more, when a smallest value of distances between end portions of the first side portion and end portions of the second side portion is expressed by w, and a distance between a central portion of the first side portion and a central portion of the second side portion is expressed by t.

## Description

### CROSS-REFERENCE TO RELATED APPLICATIONS

This application claims priority from Japanese Patent Application No. 2016-085164 filed on April 21, 2016, the entire subject matter of which is incorporated herein by reference.

### BACKGROUND OF THE INVENTION

### Technical Field

The present invention relates to a holder to be attached to a window plate for a vehicle.

### Background Art

A holder attached to a door for a vehicle to support an elevating window plate has been known (see Patent Literature 1).

Patent Literature 1 discloses a vehicle glass plate holder including a bottom portion, a pair of opposite side portions, and a flexible portion. The bottom portion and the opposite side portions form a concave portion having an approximately U-shape in section so that a vehicle glass plate can be fitted into the concave portion. The flexible portion is formed continuously to or integrally with at least one of the pair of opposite side portions. The flexible portion can be deformed in a direction varying an air gap of the concave portion. The vehicle glass plate holder can be shared among vehicle glass plates having different plate thicknesses while securing appropriate attachment strength for each vehicle glass plate.

### Patent Literature

Patent Literature 1: JP-A-2009-133094

### BRIEF SUMMARY OF THE INVENTION

Patent Literature 1 discloses a vehicle glass plate holder capable of dealing with a difference in plate thickness among vehicle glass plates (window plates). When a window plate has a flat shape, the holder can absorb a difference in plate thickness to some extent. However, the holder may be elongated to some degree to more effectively suppress vibration of the glass plate. In such a case, holders having different curvatures must be made up to deal with a plurality of window plates having different curvatures from one another. Thus, there is a problem that it is difficult to share a holder among window plates having different curvatures.

The present invention provides a holder capable of dealing with window plates having different curvatures.

The holder according to the present invention is a holder to be attached to a vehicle window plate. The holder includes a bottom portion, a first side portion provided to extend in a first direction perpendicular to the bottom portion, and a second side portion opposite to the first side portion, wherein a value t/w is 1.5 or more, when a smallest value of distances between end portions of the first side portion and end portions of the second side portion is expressed by w, and a distance between a central portion of the first side portion and a central portion of the second side portion is expressed by t.

According to the present invention, it is possible to provide a holder capable of dealing with window plates having different curvatures.

### BRIEF DESCRIPTION OF THE DRAWINGS

FIG. 1 is a conceptual view showing a use state of a holder according to the present invention.
FIG. 2A and FIG. 2B show an example of a first embodiment of the holder according to the present invention. FIG. 2A shows a front perspective view and FIG. 2B shows a sectional view taken on line A-A,
FIG. 3 is a plan view of FIG. 2A and FIG. 2B.
FIG. 4 is a table showing values of holders having different dimensions.
FIG. 5 is a plan view showing an example of a second embodiment of the holder according to the present invention.
FIG. 6 is a plan view showing an example of a third embodiment of the holder according to the present invention.
FIG. 7 is a plan view showing an example of a fourth embodiment of the holder according to the present invention.
FIG. 8 is a plan view showing an example of a fifth embodiment of the holder according to the present invention.
FIG. 9 is a plan view showing a modification of the first embodiment.

### DETAILED DESCRIPTION OF THE INVENTION

A specific embodiment of a laminated glass according to the present invention will be described below in detail with reference to the drawings.

Incidentally, it is noted that terms "parallel", "perpendicular", etc. herein allow deviations as long as the deviations do not spoil the effect of the present invention.

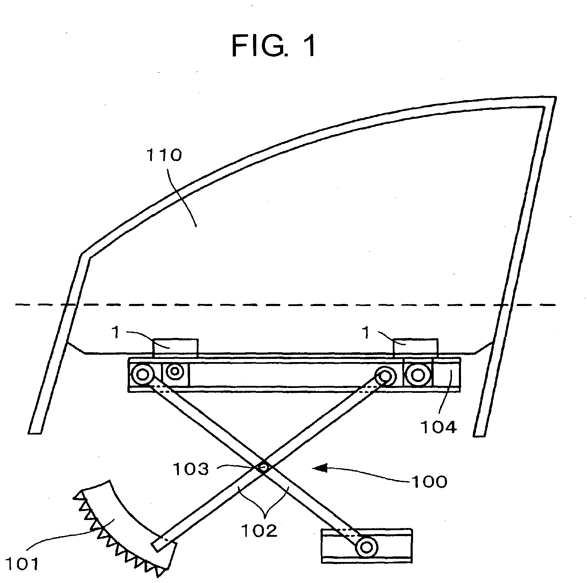

FIG. 1 is a conceptual view showing a use state of a holder according to the embodiment.

In the embodiment, a holder 1 is fixed to an upper surface of an elevating rail of a power window regulator 100 of a vehicle so as to support a bottom surface of a vehicle window plate 110. The holder 1 rises and falls in accordance with rise and fall of the power window regulator 100 so as to support and lift up and down the vehicle window plate 110 attached to a door of the vehicle. The well-known power window regulator 100 shown in FIG. 1 is an arm type regulator. That is, the power window regulator 100 has a mechanism in which two arms 102 rotate around a fulcrum 103 in accordance with drive of a gear 101 so that an elevating rail 104 can rise and fall to thereby lift up and down the vehicle window plate 110.

Incidentally, it is not limited to use the power window regulator 100 (X-arm type) shown in FIG. 1. For example, a wire type in which power for the vehicle window plate 110 is transmitted through a wire may be used.

Incidentally, a broken line in FIG. 1 schematically shows a position of a lower end of an opening portion in the door of the vehicle. In addition, the vehicle window plate 110 is not limited to one for a front door or a rear door of the vehicle. The vehicle window plate 110 may be used as any window plate as long as it is lifted up and down relatively to the vehicle. The vehicle window plate 110 is, for example, manufactured by a well-known float process.

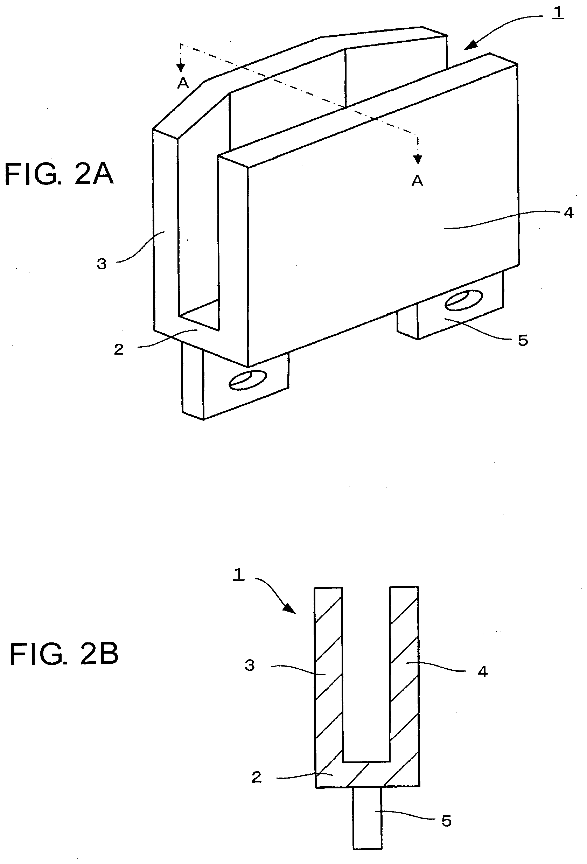

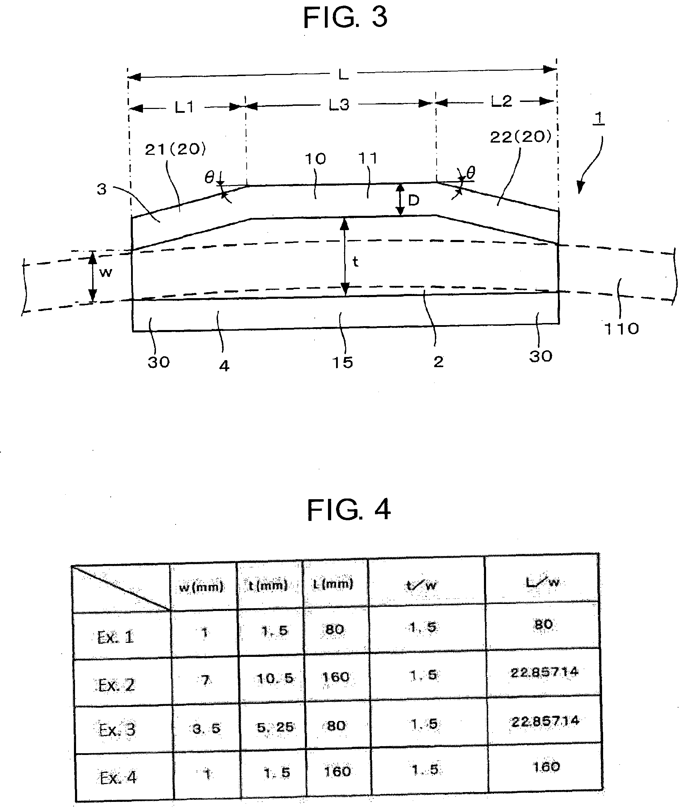

FIG. 2A and FIG. 2B show an example of a first embodiment of the holder. FIG. 2A is a front perspective view, and FIG. 2B is a sectional view taken on line A-A in FIG. 2A. FIG. 3 is a plan view of FIG. 1. The holder will be described in detail with reference to FIG. 2A, FIG. 2B, and FIG. 3.

The holder 1 according to the embodiment has an approximately quadrangular shape in front view. The holder 1 includes a bottom portion 2, a first side portion 3 and a second side portion 4. The bottom portion 2 forms an approximately U-shape in sectional view. The first side portion 3 having an approximately flat plate-like shape is provided to extend in a first direction (an up direction in FIG. 2A and FIG. 2B) perpendicular to the bottom portion 2. The second side portion 4 having an approximately flat plate-like shape is opposed to the first side portion 3 and separated therefrom. In addition, an attachment portion 5 to be fixed to the elevating rail 104 is provided in a lower portion of the bottom portion 2. The vehicle window plate 110 is disposed between the first side portion 3 and the second side portion 4.

The holder 1 according to the embodiment is, for example, formed to have a predetermined length (overall length L) and a predetermined thickness D out of a material of synthetic resin containing polybutylene terephthalate resin, polyethylene terephthalate resin or polyamide-based resin as its main component by injection molding or the like in which the material is heated and melted, injected into a forming mold, and then cooled and fixed.

In the embodiment, the first side portion 3 of the holder 1 includes a central portion 10, and end portions 20 provided to extend continuously to opposite sides of the central portion 10. The end portions 20 of the first side portion 3 include a first end portion 21 and a second end portion 22 respectively. In addition, the central portion 10 of the first side portion 3 includes a first central portion 11 substantially parallel to the second side portion 4. The first end portion 21 and the second side portion 22 are inclined at a first angle θ with respect to the first central portion 11. That is, the end portions 20 of the first side portion 3 include the first end portion 21 and the second end portion 22 located on opposite ends of the first side portion 3 respectively, and the first end portion 21 and the second end portion 22 are formed with inclination to approach end portions 30 of the second side portion 4 toward tip ends of the first end portion 21 and the second end portion 22 respectively.

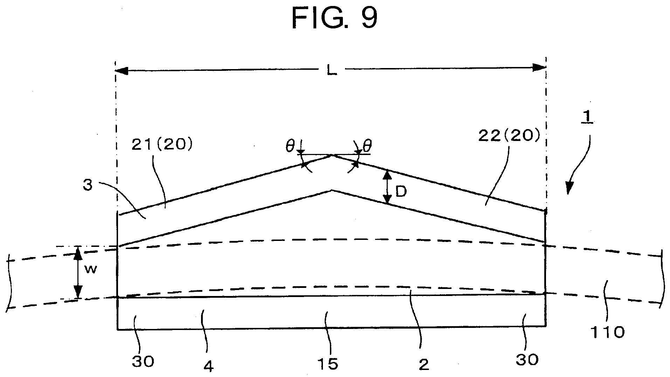

Incidentally, a modification of the embodiment is shown in FIG. 9. The holder 1 in FIG. 9 does not include the first central portion 11 substantially parallel to the second side portion 4 but includes the first end portion 21 and the second end portion 22. The first end portion 21 and the second end portion 22 are inclined at the first angle θ with respect to a plane parallel to the second side portion 4.

When a smallest value of distances between end portions 20 of the first side portion 3 and end portions 30 of the second side portion 4 is expressed by w, and a distance between a central portion 10 of the first side portion 3 and a central portion 15 of the second side portion 4 is expressed by t, the distance w is smaller than the distance t (w<t). The smallest value w is a distance (closest approach distance) between the first side portion 3 and the second side portion 4 at a place where the both are closest to each other. In the embodiment, the smallest distance (closest approach distance) value w corresponds to a distance between the first side portion 3 and the second side portion 4 at the opposite ends of the holder 1.

The vehicle window plate 110 is held by the first end portion 21 and the second end portion 22 of the first side portion 3 respectively and the end portions 30 of the second side portion 4. The holder 1 is attached to a bottom surface of the vehicle window plate 110 by a bonding agent or the like. The distance t between the central portion 10 of the first side portion 3 and the central portion 15 of the second side portion 4 can be made larger than the distance w between the first end portion 21 and the end portions 30 of the second side portion 4 in accordance with formation states of the first end portion 21 and the second end portion 22. Thus, a difference in curvature among a plurality of vehicle window plates can be absorbed. That is, a separation distance (t) between the central portion 10 of the first side portion 3 and the central portion 15 of the second side portion 4 is increased while a separation distance (w) between each of the first side portion 21 and the second end portion 22 and the first side portion 3 is adjusted to a thickness of the vehicle window plate 110.

In addition, the holder 1 can be applied to vehicle window plates 110 having various large and small curvatures when the first angle θ is 0.1° or more and 10° or less.

Incidentally, an inclination angle of the first end portion 21 may be equal to an inclination angle of the second end portion 22. Alternatively, it will go well if at least one of the inclination angles is 0.1° or more and 10° or less.

Examples of holders 1 having different dimensions corresponding to measured values of the vehicle window plates 110 will be described below with reference to a table of FIG. 4.

In Example 1, the distance w between the first end portion 21 and the end portions 30 or between the second end portion 22 and the end portions 30 of the second side portion 4 is 1 mm, the distance t between the central portion 10 of the first side portion 3 and the central portion 15 of the second side portion 4 is 1.5 mm, and the overall length L of the holder 1 is 80 mm. In these values, t/w is 1.5, and L/w is 80. In Example 2, w=7 mm, t=10.5 mm, and L=160 mm. In Example 3, w=3.5 mm, t=5.25 mm, and L=80 mm. In Example 4, w=1 mm, t=1.5 mm, and L=160 mm. Further, the values t/w and L/w in Examples 1 to 4 are shown in the table of FIG. 4.

The followings can be set based on the table.
(1) It is preferable that the overall length L of the holder 1 to be attached to the bottom surface of the vehicle window plate 110 is 80 mm or more in order to suppress vibration of the glass plate and improve strength for supporting the glass plate. In addition, when the overall length L of the holder is 200 mm or less, a shape of the holder 1 is hardly deformed locally due to a weight of the vehicle window plate 110, and a space required for placing the holder 1 in the vehicle window plate 110 can be suppressed. The value of the overall length L is preferably 80 mm or more and 200 mm or less, more preferably 90 mm or more and 180 mm or less, and further more preferably 100 mm or more and 160 mm or less.
(2) The distance w is preferably 1 mm or more and 7 mm or less, more preferably 1.5 mm or more and 6.5 mm or less, and further more preferably 2.0 mm or more and 6.0 mm or less. Thus, the holder 1 can deal with vehicle a window plate 110 having different curvature.
(3) The distance t is preferably 1 mm or more and 12 mm or less, more preferably 1.3 mm or more and 11 mm or less, and further more preferably 1.5 mm or more and 10.5 mm or less. Thus, the holder 1 can deal with vehicle window plates 110 having different curvature.

The following values t/w and L/w are set based on the table.
(4) The value t/w may be 1.5 or more. The value t/w is preferably 1.8 or more, more preferably 2.0 or more, and further more preferably 2.5 or more. The holder 1 can be shared because it allows vehicle window plates 110 having different curvatures between the central portion 10 of the first side portion 3 and the central portion 15 of the second side portion 4 while holding each vehicle window plate 110 stably in the end portions 20.
(5) The value L/w may be 15 or more. The value t/w is preferably 18 or more, and more preferably 20 or more. The overall length L is increased relatively to the distance w in the end portions 20 so that the vehicle window plate 110 can be supported stably by the holder 1

The overall length L is formed to make length L3 of the first central portion 11 smaller than the total length of length L1 of the first end portion 21 and length L2 of the second end portion 22 (L3<L1+L2). Thus, it is possible to secure enough areas in the opposite end portions 21 and 22 to support the vehicle window plate 110.

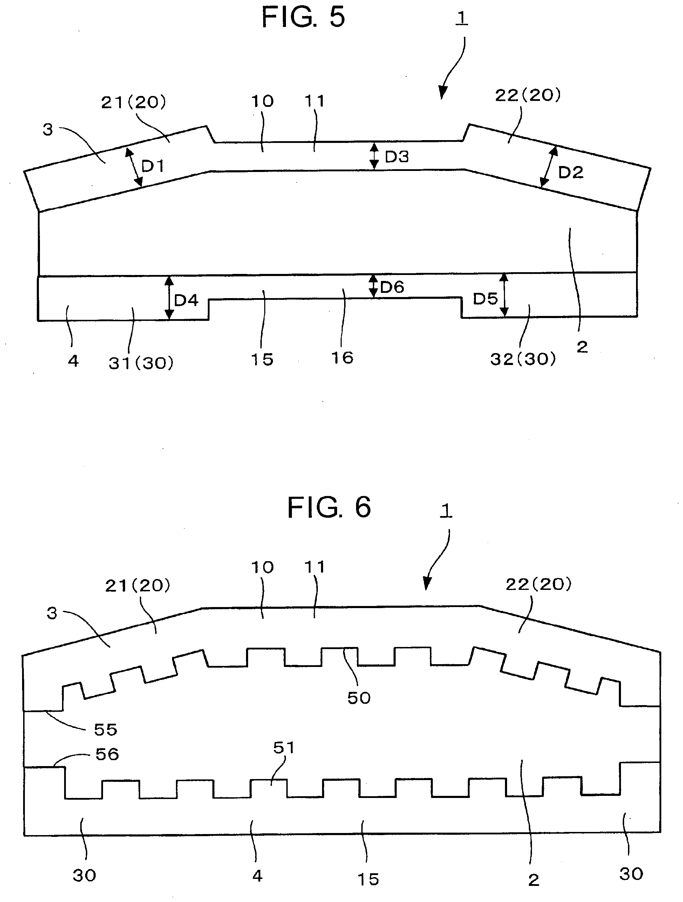

FIG. 5 is a plan view showing a second embodiment of the holder 1. The second embodiment of the holder 1 will be described with reference to FIG. 5.

Although the central portion 10 of the first side portion 3 and the end portions 20 have the same thickness D in the first embodiment, the holder 1 according to the second embodiment includes parts different in a thickness D. In the second embodiment, a thickness D1 of the first end portion and a thickness D2 of the second end portion are formed to be larger than a thickness D3 of the first central portion 11. To say other words, the thickness D1 of the first end portion 21 and the thickness D2 of the second end portion are equal to or larger than the thickness D3 of the first central portion 11. That is, D1≥D3 and D2≥D3.

When the thickness D1 of the first end portion 21 and the thickness D2 of the second end portion 22 are made larger than the thickness D3 of the first central portion 11, strength in the end portions 20 for supporting the vehicle window plate 110 can be improved.

In the same manner, in the second side portion 4, the central portion 15 of the second side portion 4 corresponding to the central portion 10 of the first side portion 3 is formed to be thinner than its periphery in the second embodiment. Specifically, the second side portion 4 has a third end portion 31 in a position corresponding to the first end portion 21 of the first side portion 3, a fourth end portion 32 in a position corresponding to the second end portion 22, and a second central portion 16 in a position corresponding to the first central portion 11.

Thickness D6 of the second central portion 16 is formed to be smaller than thickness D4 of the third end portion 31 and thickness D5 of the fourth end portion 32. To say other words, the thickness D4 of the third end portion 31 and the thickness D5 of the fourth end portion 32 are not smaller than the thickness of the second central portion 16. That is, D4≥D6 and D5≥D6.

When the thickness D4 of the third end portion 31 and the thickness D5 of the fourth end portion 32 are made thicker than the thickness D6 of the second central portion 16, strength in the third end portion 31 and the fourth end portion 32 for supporting the vehicle window plate 110 can be improved.

FIG. 6 is a plan view showing a third embodiment of the holder 1. The third embodiment of the holder 1 will be described with reference to FIG. 6.

The holder 1 according to the third embodiment is fundamentally the same as the holder 1 according to the first embodiment, except that concave and convex surfaces 50 and 51 having irregular shapes are formed respectively in inner surfaces of the first side portion 3 and the second side portion 4 opposed to each other. The concave and convex surfaces 50 and 51 may be formed all over the inner surfaces, or may be formed partially. In addition, flat surface portions 55 and 56 substantially parallel to each other may be formed at a tip end of the first end portion 21, a tip end of the second end portion 22 and tip ends of the second side portion 4 as shown in the third embodiment.

When concave and convex surfaces 50 and 51 are provided in at least a part of a region where the first side portion 3 and the second side portion 4 are opposed to each other, a bonding agent for attaching the holder 1 for the vehicle window plate 110 can be suppressed from leaking out in a length direction of the holder 1.

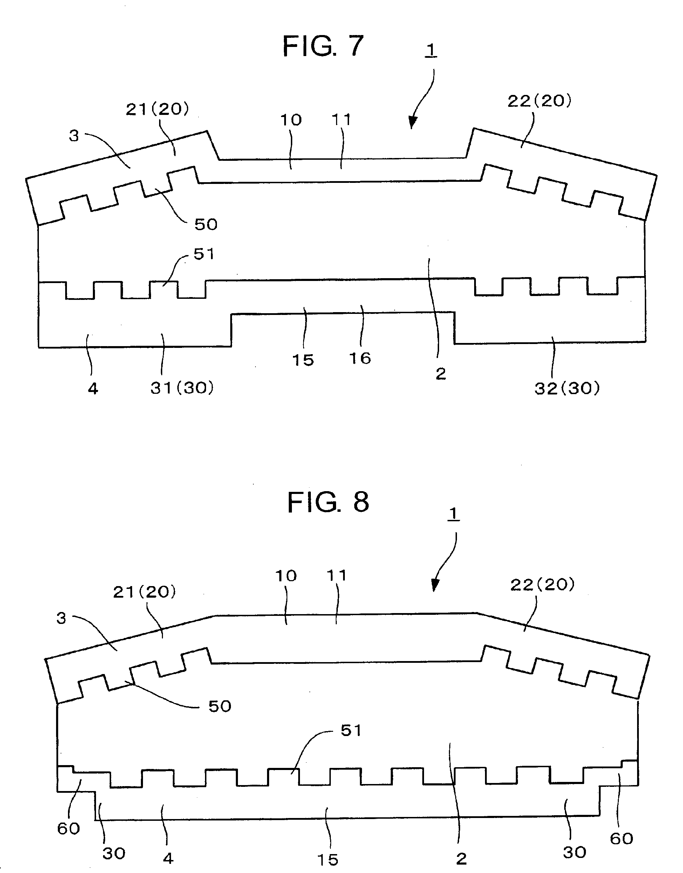

FIG. 7 is a plan view showing a fourth embodiment of the holder 1. The fourth embodiment of the holder 1 will be described with reference to FIG. 7.

In the holder 1 according to the fourth embodiment, the first embodiment is used fundamentally and combined with the second embodiment and the third embodiment. The concave and convex surfaces 50 and 51 are formed in surfaces of the first end portion 21, the second end portion 22, the third end portion 31 and the fourth end portion 32 corresponding to each other. The first central portion 11 is formed to be thinner than the first end portion 21 and the second end portion 22. The second central portion 16 is also formed to be thinner than the third end portion 31 and the fourth end portion 32.

FIG. 8 is a plan view showing a fifth embodiment of the holder 1. The fifth embodiment of the holder 1 will be described with reference to FIG. 8.

In the holder 1 according to the fifth embodiment, the first embodiment is used fundamentally and combined with the fourth embodiment. The concave and convex surfaces 50 are formed in inner surfaces of the first end portion 21 and the second end portion 22 of the first side portion 3. In addition, a concave and convex surface 51 are also formed in an inner surface of the second side portion 4. Flexible portions 60 elastically deformed are formed in the opposite end portions 30 of the second side portion 4. Although the flexible portions 60 are provided to extend in parallel with the second side portion 4 in the fifth embodiment, the flexible portions 60 may be inclined thereto.

Due to the flexible portions 60 formed thus, the holder 1 can be shared among vehicle window plates having different plate thicknesses.

Although the embodiment is described along the first side portion 3 substantially having a flat plate-like shape by way of example, the first side portion 3 may be curved as a whole. In addition, the first side portion 3 and the second side portion 4 may be curved. In addition, the central portion 10 of the first side portion 3 may correspond to the boundary between the first end portion 21 and the second end portion 22.

Incidentally, the present invention is not limited to the aforementioned embodiments, but deformations, improvements, etc. can be made suitably. In addition, materials, shapes, dimensions, values, forms, numbers, arrangement places, etc. of respective constituent elements in the aforementioned embodiments are not limited. Any materials, any shapes, any dimensions, any values, any forms, any numbers, any arrangement places, etc. may be used as long as the invention can be attained.

### Industrial Applicability

A holder according to the invention is suitably used for a power window regulator or the like needing a holder that can be shared among vehicle window plates having different curvatures.

### Description of Reference Numerals and Signs

- 1: holder
- 2: bottom portion
- 3: first side portion
- 4: second side portion
- 10: central portion of first side portion
- 11: first central portion
- 15: central portion of second side portion
- 16: second central portion
- 20: end portion of first side portion
- 21: first end portion
- 22: second end portion
- 30: end portion of second side portion
- 31: third end portion
- 32: fourth end portion
- 50, 51: concave and convex surface
- 60: flexible portions
- 110: vehicle window plate
- D: thickness
- L: overall length
- t: distance between central portions
- w: distance between end portions
- θ: first angle

## Claims

1. A holder to be attached to a vehicle window plate, the holder comprising:
a bottom portion;
a first side portion provided to extend in a first direction perpendicular to the bottom portion; and
a second side portion opposite to the first side portion; wherein:
a value t/w is 1.5 or more,
when a smallest value of distances between end portions of the first side portion and end portions of the second side portion is expressed by w, and a distance between a central portion of the first side portion and a central portion of the second side portion is expressed by t.

2. The holder according to claim 1, wherein:
a value L/w is 15 or more,
when an overall length of the holder is expressed by L.

3. The holder according to claim 1 or 2, wherein:
an overall length L of the holder is 80 mm or more.

4. The holder according to any one of claims 1 to 3, wherein:
the smallest value w of the distances between the end portions of the first side portion and the end portions of the second side portion is 1 mm or more and 7 mm or less.

5. The holder according to any one of claims 1 to 4, wherein:
the end portions of the first side portion comprise a first end portion and a second end portion located on opposite ends of the first side portion respectively; and
the first end portion and the second end portion are inclined at a first angle with respect to a plane parallel to the second side portion.

6. The holder according to any one of claims 1 to 4, wherein:
the end portions of the first side portion comprise a first end portion and a second end portion located on opposite ends of the first side portion respectively;
the central portion of the first side portion comprises a first central portion parallel to the second side portion; and
the first end portion and the second end portion are inclined at a first angle with respect to the first central portion.

7. The holder according to claim 5 or 6, wherein:
the first angle is 0.1° or more and 10° or less.

8. The holder according to claim 6 or 7, wherein:
a length of a first central portion is smaller than a total length of the first end portion and the second end portion.

9. The holder according to any one of claims 6 to 8, wherein:
a thickness of the first end portion and a thickness of the second end portion are larger than a thickness of a first central portion.

10. The holder according to any one of claims 1 to 9, wherein:
the second side portion comprises a second central portion, a third end portion and a fourth end portion; and
a thickness of the third end portion and a thickness of the fourth end portion are larger than a thickness of the second central portion.

11. The holder according to any one of claims 1 to 10, further comprising:
flexible portions elastically deformable provided in the end portions of the second side portion.

12. The holder according to claim 11, wherein:
the flexible portions are provided to extend in parallel to the second side portion.

13. The holder according to any one of claims 1 to 12, wherein:
concave and convex surfaces are provided in at least a part of a region where the first side portion and the second side portion are opposed to each other.
